Europäisches Patentamt

European Patent Office

Office européen des brevets

(19)

(11) Veröffentlichungsnummer: **0 315 624**
**A2**

(12) # EUROPÄISCHE PATENTANMELDUNG

(21) Anmeldenummer: **89100988.8**

(22) Anmeldetag: **20.01.89**

(51) Int. Cl.⁴: **G 11 B 5/41**

(30) Priorität: **25.11.88 DE 8814726**

(43) Veröffentlichungstag der Anmeldung:
**10.05.89 Patentblatt 89/19**

(84) Benannte Vertragsstaaten:
**AT BE CH DE ES FR GB GR IT LI LU NL SE**

(71) Anmelder: **GIGATAPE SYSTEME FUER
DATENSICHERUNG GMBH
Benzstrasse 28
D-8039 Puchheim (DE)**

(72) Erfinder: **Sonntag, Harald
Weltistrasse 73
D-8000 München 71 (DE)**

(74) Vertreter: **Weber, Otto Ernst, Dipl.-Phys. et al
Weber & Heim Hofbrunnstrasse 36
D-8000 München 71 (DE)**

(54) **Verfahren zur Magnetkopfreinigung und Vorrichtung zur Durchführung des Verfahrens.**

(57) Das Verfahren zur Magnetkopfreinigung wird mit Hilfe eines Magnetbandes durchgeführt, welches zusätzlich zu demjenigen Bandabschnitt, der mit magnetisierbarem Material beschichtet ist, einen endseitigen Reinigungsbandabschnitt aufweist. Der Reinigungsbandabschnitt ist mit einer Beschichtung zur mechanischen und/oder chemischen Reinigung des Magnetkopfes versehen. Die vom Magnetband ausgelesenen Daten werden daraufhin ausgewertet, ob ein Datenfehler vorliegt, der auf eine Magnetkopfverschmutzung zurückgeht. Wird ein solcher Fehler detektiert, so wird der Reinigungsbandabschnitt angesteuert.

Fig. 1

EP 0 315 624 A2

## Beschreibung

## Verfahren zur Magnetkopfreinigung und Vorrichtung zur Durchführung des Verfahrens

Die Erfindung betrifft ein Verfahren zur Magnetkopfreinigung eines Magnetbandschreib-/lesegerätes und eine Vorrichtung zur Durchführung des Verfahrens, bei welchem ein Reinigungsband am Magnetkopf entlang geführt wird. Die Erfindung betrifft ferner ein Magnetband.

Es ist bekannt, ein in einer Kunststoffkassette aufgespultes Magnetband zur Datenspeicherung zu verwenden. Diese Bänder sind mit einem Vorlauf- und einem Nachlaufbandabschnitt versehen, die dazu dienen, den Bandanfang und das Bandende mit Hilfe von optischen Sensoren zu erkennen. Hierbei wird die Lichtdurchlässigkeit dieser Abschnitte im Unterschied zu dem lichtundurchlässig eingefärbten, mit der magnetisierbaren Schicht versehenen Bandabschnitt als Erkennungskriterium ausgenutzt.

Zum Beschreiben und zum Auslesen des Magnetbandes muß dieses an einem Magnetkopf vorbeigeführt werden, wobei bei den neuerdings verwendeten Aufzeichnungstechnologien V 8 und RDAT eine rotierende Trommel verwendet wird, die mit 2 oder 4 Magnetköpfen versehen ist. Wesentlich ist hierbei ein enger Kontakt zwischen dem Bandmaterial und dem Magnetkopf, der dadurch erreicht wird, daß der Magnetkopf in Bandlaufrichtung abgerundet ist und das Band mit einer vorgegebenen Vorspannung über den Scheitel dieser Abrundung geführt wird. In den dabei unvermeidlich entstehenden Winkeln zwischen dem Magnetband und den abgerundeten Seiten des Magnetkopfes sammelt sich Abrieb der Bandbeschichtung, der durch den mechanischen Kontakt entsteht. Dieser Effekt ist in besonderem Maß dann zu beobachten, wenn als Beschichtung Reineisen-Teilchen verwendet werden, die sich wegen der damit erreichbaren, für die Datenverarbeitung erwünschten hohen Aufzeichnungsdichte als besonders günstig erweisen.

Der Abrieb bildet eine unerwünschte Rampe, welche dazu führt, daß das Magnetband vom Magnetkopf abgehoben wird, so daß die magnetische Aufzeichnung bzw. das Auslesen nicht mehr zuverlässig erfolgt. Mit zunehmendem Anwachsen der Ablagerungen kann es zu einem weiteren sehr nachteiligen Effekt kommen. Wenn sich eine größere Teilchenmenge aus der Ablagerung löst, wird sie durch die Trommelrotation am Magnetkopf vorbeigeschleudert. Das Ergebnis ist, daß eine ganze oder mehrere der schräg auf das Band aufgezeichneten Informationsspuren ins Leere geschrieben werden, da der vorbeigeschleuderte Teilchenbrocken das Magnetband vom Kopf abhebt und somit eine Magnetisierung nicht möglich ist.

Bisher hat man versucht, eine zuverlässige Datenaufzeichnung bzw. das Auslesen von Daten dadurch zu gewährleisten, daß man die Magnetköpfe mit Hilfe eines separaten Reinigungsbandes in regelmäßigen Abständen von angesammeltem Abrieb reinigt. Zu diesem Zweck muß die den Datenträger enthaltende Bandcassette aus dem Schreib-/Lesegerät entfernt werden und es muß die Cassette mit dem Reinigungsband eingesetzt werden. Dies führt zwangsläufig zu einer relativ langen Unterbrechung des Datenverarbeitungsbetriebes, in welcher keine Zugriff auf den Datenträger möglich ist. Außerdem ist eine Bedienperson erforderlich. Besonders nachteilig ist ferner, daß die auf der Basis von Scheuermitteln wirkende mechanische Bandreinigung auch eine zerstörende Wirkung auf den Magnetkopf hat. Dies läßt sich dadurch erklären, daß der Magnetkopf eine Kopfspaltbreite von nur wenigen Mikrometern hat und durch die scheuernde Wirkung des Reinigungsbandes sich die Übertragungscharakteristik verändert. Eine präventive Reinigung, wie sie bisher erforderlich war, ist daher nicht nur zeit-, personal- und kostenaufwendig, sondern führt zwangsläufig wegen der vorsorglichen, häufigen Reinigung zu einer Verkürzung der Magnetkopflebenszeit.

Der Erfindung liegt die Aufgabe zugrunde, Verfahren und eine Vorrichtung der eingangs genannten Art anzugeben, mit welchen ein magnetkopfschonender Betrieb bei gutem Bandkontakt möglich ist.

Diese Aufgabe wird mit den im kennzeichnenden Teil der unabhängigen Ansprüche enthaltenen Merkmalen gelöst.

Bei dem erfindungsgemäß mit einem Reinigungsbandabschnitt versehenen Magnetband besteht das Reinigungsmittel bevorzugt aus einem mechanisch wirkenden Scheuermittel. Es können aber auch zusätzlich chemisch wirkende, reinigungsaktive Substanzen vorhanden sein. Zur Reinigung von Magnetköpfen besonders gut geeignete mechanische und chemische Beschichtungen sind von denjenigen Reinigungsbändern bekannt, die separat in gesonderten Cassetten im Handel befindlich sind.

Mit der Erfindung wird der große Vorteil erreicht, daß der Magnetkopf gereinigt werden kann, ohne daß das dateninformationtragende Band aus dem Schreib-/Lesegerät entfernt werden muß. Somit kann das sogenannte Host-System unbeschränkt weiterhin auf die abgespeicherten Daten zugreifen bzw. Neuinformationen einschreiben. Da kein Cassettenwechsel erforderlich ist, kann der gesamte Reinigungsvorgang unter Steuerung des betreffenden Rechners ausgeführt werden, ohne daß hierzu die Anwesenheit einer Bedienperson erforderlich ist. Damit ist der weitere grosse Vorteil verbunden, daß die Reinigung des Magnetkopfes gezielt nur dann ausgeführt zu werden braucht, wenn dies der Verschmutzungsgrad tatsächlich erfordert. Der Kontakt zwischen dem Magnetkopf und dem Reinigungsband wird damit auf das Mindestmaß reduziert und unnötiger Verschleiß wird verhindert. Die Entscheidung, zu welchem Zeitpunkt und in welcher Zeitspanne der Reinigungsvorgang durchgeführt wird, kann durch eine Auswertung der abgespeicherten Daten mit Hilfe eienr Fehlererkennungsmethode ermittelt werden. Insgesamt läßt sich beim Einsatz des erfindungsgemäßen Datenträgers praktisch ein ununterbrochener Betrieb zuverlässig aufrechterhalten.

Eine bevorzugte Weiterbildung der Erfindung besteht darin, daß der Reinigungsbandabschnitt transparent ist. Durch diese Maßnahme identifiziert das Schreib-/Lesegerät den Reinigungsbandabschnitt als Bandnachlauf, wie er ansonsten durch den üblichen Standard-Nachlaufbandabschnitt gekennzeichnet ist. Somit wird im "normalen" Betrieb nicht auf den Reinigungsbandabschnitt zugegriffen und ein zufälliger, unkontrollierter Reibkontakt mit dem Magnetkopf wird verhindert. Es ist vielmehr sicher gestellt, daß ein Zugriff ausschließlich gezielt unter rechnerischer Steuerung erfolgt. Grundsätzlich kann daher bei dieser Weiterbildung der Erfindung der Reinigungsbandabschnitt den standardisierten Nachlaufbandabschnitt ersetzen.

Besonders zweckmäßig ist es jedoch, daß in einer alternativen Weiterbildung der Erfindung der Reinigungsbandabschnitt nach dem standardmäßigen Nachlaufbandabschnitt angeordnet ist. Damit wird sichergestellt, daß der Reinigungsbandabschnitt ausschließlich über eine spezielle Ansteuerung in Betrieb genommen werden kann. Um zu gewährleisten, daß auch bei vollständiger Ausnutzung des Reinigungsbandabschnittes ausreichend Nachlauf vorhanden ist, ist es vorteilhaft, als Bandabschluß einen weiteren Nachlaufbandabschnitt vorzusehen.

Es kann sich als sehr zweckmäßig erweisen, daß der Reinigungsbandabschnitt und der Nachlaufbandabschnitt einstückig ausgebildet sind, d.h. der betreffende transparente Kunststoffstreifen ist lediglich abschnittsweise mit Reinigungsmittel beschichtet.

Versuche haben gezeigt, daß es für den praktischen Einsatz besonders zweckmäßig ist, daß bei einem etwa 30 m langen mit magnetisierbarem Material beschichteten Bandabschnitt ein Reinigungsbandabschnitt von etwa 30 cm Länge vorhanden ist. Eine derartige Länge des Reinigungsbandabschnittes reicht damit aus, innerhalb der durchschnittlichen Lebenszeit des Magnetbandes bzw. einer Bandcassette alle erforderlichen Magnetkopfreinigungen durchzuführen. Da der Reinigungsbandabschnitt Bestandteil der Cassette ist, kann er genau so bemessen werden, daß er mit der "natürlichen" Alterung bzw. dem Verschleiß der Cassette unbrauchbar wird.

Bevorzugte Ausgestaltungen des erfindungsgemäßen Verfahrens und der Schaltungsanordnung zur Durchführung des Verfahrens sind in Unteransprüchen beschrieben.
Nachfolgend wird die Erfindung anhand von in der Zeichnung dargestellten Ausführungsbeispielen weiter beschrieben:

Figur 1 zeigt schematisch ein Magnetband,
Figur 2 zeigt schematisch eine Magnetbandcassette und eine Magnetkopftrommel, und
Figur 3 zeigt eine Schaltungsanordnung zur Ansteuerung des Magnetbandes gemäß Figur 1.

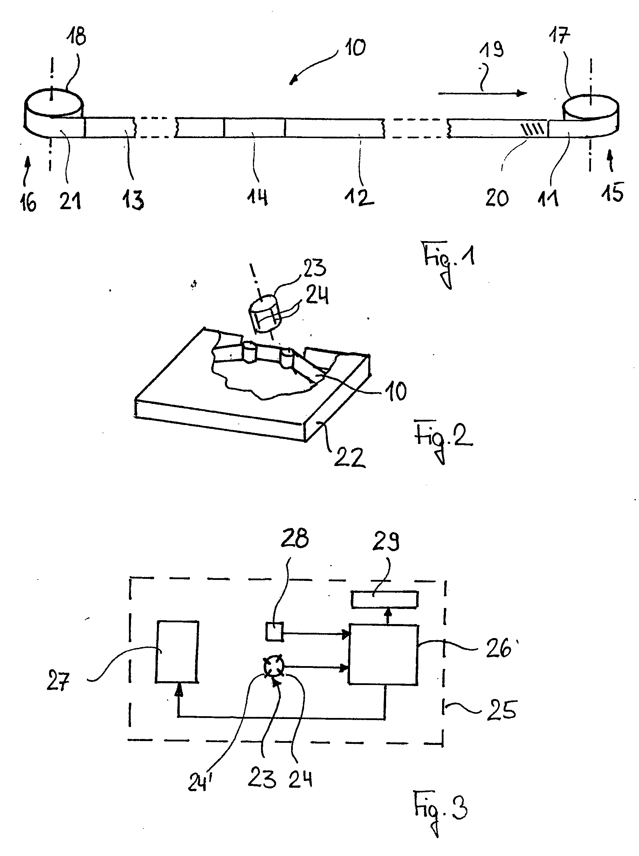

Die Figur 1 veranschaulicht schematisch einen streifenförmigen Datenträger 10, wie er in sogenannten Magnetbandcassetten für die Datenverarbeitung als Daten- und Programmspeicher verwendet wird. Der Datenträger 10 ist in Längsrichtung aus verschiedenen Bandabschnitten zusammengesetzt, die jeweils an den ihren Stirnseiten miteinander verklebt sind.

Als Grundmaterial der einzelnen Bandabschnitte dient Kunststoff.

Ein Bandanfang 15 ist dadurch definiert, daß er bei der Anordnung innerhalb einer Standard-Datencassette (Fig. 2) im Ausgangszustand der Datencassette an einer leeren Cassettenaufwickelspule 17 befestigt ist. Sinngemäß ist das Bandende 16 im Ausgangszustand an einer vollen Abwickelspule 18 befestigt. Die Vorwärtslaufrichtung ist mit Pfeil 19 gekennzeichnet. Außerdem ist die Bandanfangsseite des Datenträgers 10 dadurch festgelegt, daß in diesem Bandbereich die Lade-Programmteile aufgezeichnet sind, während die eigentlichen Nutzdaten auf der verbleibenden Bandoberfläche aufgezeichnet sind. Die Aufzeichnung von Daten erfolgt dabei über Schrägspuren 20, wie sie der Vollständigkeit halber schematisch am Anfang eines mit einem magnetisierbaren Material beschichteten Bandabschnitts 12 dargestellt sind.

Wie die Figur 1 zeigt, ist am Datenträger 10 ein unbeschichteter transparenter Vorlaufabschnitt 11 vorhanden, an welchem sich der mit der magnetisierbaren Schicht versehene Bandabschnitt 12 anschließt, dessen Kunststoffmaterial dunkel eingefärbt ist. Mit Hilfe eines Schreib-Lesegerätes (Fig. 3) werden auf diesem Bandabschnitt elektromagnetische Aufzeichnungen vorgenommen, d.h. er dient als der eigentliche Informationsträger.

Am Ende dieses Bandabschnitts 12 befindet sich ein unbeschichteter, transparenter Nachlauf-Bandabschnitt 14. In Richtung auf das Bandende folgt dann ein Reinigungsbandabschnitt 13, der mit einem mechanisch wirkenden Reinigungsmittel zur Reinigung eines Magnetkopfes (Fig. 2) des Schreib-/Lesegerätes beschichtet ist. Zum Bandabschluß ist schließlich ein weiterer, unbeschichteter, transparenter Nachlaufbandabschnitt 21 vorhanden. Der Reinigungsbandabschnitt 13 kann transparent oder lichtundurchlässig sein.

Wie die Figur 2 veranschaulicht, befindet sich der Datenträger 10 in einer Kunststoffcassette 22, die mit teilweise aufgeschnittener Oberseite wiedergegeben ist. Im Betrieb wird der Datenträger 10 an einer rotierenden Magnetkopftrommel 23 vorbeigeführt, die beispielsweise mit zwei oder vier Magnetköpfen 24 im Bereich der Trommeloberfläche versehen ist. Die Magnetkopftrommel 23 ist zur Laufrichtung des Datenträgers 10 geneigt, sodaß die in Figur 1 beschriebenen Schrägspuren 20 bei der Datenaufzeichnung erzeugt werden.

Gemäß Figur 3 ist die Magnetkopftrommel 23 Teil einer Schreib-/Leseeinheit 25 einer Datenverarbeitungseinrichtung. Die Magnetköpfe, bzw. die Magnetkopftrommel 23 ist mit einer elektronischen Auswerteeinheit 26 verbunden, mit welcher die vom Datenträger 10 ausgelesenen Daten auf Bit-Fehler, Blockfehler, Spurfehler, Schlupffehler usw. hin ausgewertet werden. Aufgrund der ermittelten Fehlerart kann die Fehlerursache ermittelt werden, wobei die charakteristischen Längenunterschiede der Fehler berücksichtigt werden. Ist beispielsweise ein Datenfehler aufgrund eines Defekts in der Modulationsschaltung aufgetreten, so hat dieser regelmäßig eine Länge von wenigen Bits. Bereits nach kurzer Zeit nimmt der Demodulator die Synchronisation wieder auf und die Störung ist beendet.

Ist dagegen auf dem Datenträger 10 eine defekte Stelle, die auch als Drop-out bezeichnet wird, entsteht ein Blockfehler, der sich über einen größeren Bereich innerhalb der Datenspur auswirkt.

Wenn eine Magnetkopfverschmutzung vorliegt, so wird in der Regel die gesamte Spur nicht lesbar sein, weil die angelagerte Verschmutzung, beispielsweise Metallstaubbrocken, während der gesamten Datenspur auf dem Magnetkopf 24 anliegt. Erst wenn die Magnetkopftrommel 23 wieder in Rotation versetzt wird, kann er durch die Fliehkraft weggeschleudert werden. Außerdem ist für einen Blockfehler typisch, daß die benachbarte Datenspur nicht vom Fehler betroffen ist, da ein anderer Magnetkopf 24' diese nächste Spur liest. Dies gilt sinngemäß auch für den Fall, daß an einem Magnetkopf 24 eine Verschmutzungsrampe vorliegt.

Zu einer sicheren Erkennung der Fehlerart trägt auch bei, daß mehrere Leseversuche unternommen werden und/oder daß eine Fehlerstatistik erstellt wird, beispielsweise um Band-Verschließerscheinungen zu erkennen.

Charakteristisch für die Fehlerart, die auf eine Verschmutzung der Magnetkopftrommel 23 bzw. der Magnetköpfe 24 zurückgeht, ist, daß nach einem Reinigungsvorgang der Fehler verschwunden ist. Ist dies nicht der Fall, so muß es sich zwangsläufig um eine andere Fehlerart handeln.

Nachfolgend werden typische Kriterien aufgelistet, mit welchen eine auf die Verschmutzung eines Magnetkopfes 24 zurückgehender Fehler erkannt, bzw. ausgeschlossen werden kann:

     E 1 = die Fehlerlänge ist größer als ein Datenblock

     E 2 = zwei benachbarte Datenspuren weisen an der gleichen Stelle einen Fehler auf

     E 3 = bei einem erneuten Leseversuch liegt kein Fehler vor

     E 4 = die Rohfehlerrate nimmt im Bereich kurzer Fehler langsam zu (statistische Auswertung)

     E 5 = nach einem Reinigungsvorgang ist eine Verbesserung erkennbar

Eine Reinigung der Magentköpfe 24 ist beispielsweise dann notwendig und erfolgreich, wenn die Bedingung E 2 nicht vorliegt und die Bedingung E 4 vorliegt. Gleiches gilt, wenn die Bedingungen E 1, E 3 und E 5 vorliegen, aber die Bedingung E 2 nicht zutrifft.

Selbstverständlich können sinngemäß noch andere Bedingungen gefunden werden, die zu dem Ergebnis führen, daß die Magnetköpfe 24 einer Reinigung bedürfen, um ein fehlerfreies Auslesen der auf dem Datenträger 10 gespeicherten Daten zu ermöglichen.

Nachfolgend wird anhand der Figuren 1 bis 3 beispielhaft ein Reinigungsvorgang erläutert. Sobald die Auswerteeinheit 26 in der vorstehend beschriebenen Weise einen Fehler detektiert hat, der auf einer Magnetkopfverschmutzung beruht, so steuert sie über einen Cassettenantrieb 27, welcher auf die Aufwickelspule 17 bzw. die Abwickelspule 18 wirkt, das Bandende an. Dabei wird zunächst der transparente Nachlaufbandabschnitt 14 von einer opto-elektronischen Abtasteinheit 28 detektiert. Anschließend wird der Reinigungsbandabschnitt 23 angesteuert und für eine vorgegebene Zeit am betreffenden Magnetkopf 24 vorbeigeführt. Durch die mechanische Reibung wird dabei der Magnetkopf 24 gereinigt. Alternativ oder zusätzlich zu einem Vorlauf des Reinigungsbandabschnittes 13 kann auch die Magnetkopftrommel 23 um eine vorgegebene Anzahl von Umdrehungen unter Reibkontakt mit dem Reinigungsbandabschnitt 13 in Bewegung gesetzt werden. Nach dem Reinigungsvorgang wird der Bandabschnitt 12 zur Fortsetzung des Schreib-/Lesevorgangs angesteuert.

Während des ganzen Reinigungsvorgangs bleibt die betreffende Datenverarbeitungseinrichtung betriebsbereit, d.h. sie ist beispielsweise für ein Host-System verfügbar.

Über eine optische Anzeigeneinheit 29 kann dem Bediener signalisiert werden, daß ein Reinigungsvorgang während des Betriebes durchgeführt wird oder durchgeführt wurde. Im übrigen ist es zweckmäßig, die Reinigungsvorgänge zumindest der Anzahl nach zu protokollieren und entsprechende Informationen auf dem Datenträger 10 abzuspeichern. Anhand dieser Daten werden bei jedem Reinigungsvorgang verschiedene Bereiche des Reinigungsbandabschnittes 13 angesteuert.

**Patentansprüche**

1. Streifenförmiger Datenträger aus Kunststoff mit einem transparenten Vorlaufabschnitt, einem mit einer magnetisierbaren Schicht versehenen Bandabschnitt sowie mit einem transparenten Nachlaufabschnitt, dadurch gekennzeichnet, daß nach dem mit der magnetisierbaren Schicht versehenen Bandabschnitt(12) ein mit einem Magnetkopf-Reinigungsmittel beschichteter Reinigungsbandabschnitt (13) vorhanden ist.

2. Datenträger nach Anspruch 1, dadurch gekennzeichnet, daß der Reinigungsbandabschnitt (13) mit einem mechanisch wirkenden Scheuermittel beschichtet ist.

3. Datenträger nach Anspruch 1 oder 2, dadurch gekennzeichnet, daß der Reinigungsbandabschnitt (13) mit einer chemisch wirkenden reinigungsaktiven Substanz beschichtet ist.

4. Datenträger nach einem der vorhergehenden Ansprüche, dadurch gekennzeichnet, daß der Reinigungsbandabschnitt (13) transparent ist.

5. Datenträger nach einem der vorhergehenden Ansprüche, dadurch gekennzeichnet, daß der Reinigungsbandabschnitt (13) nach dem Nachlaufbandabschnitt (14) angeordnet ist.

6. Datenträger nach Anspruch 5, dadurch gekennzeichnet, daß nach dem Reinigungsbandabschnitt (13) ein weiterer Nachlaufbandabschnitt (21) vorhanden ist.

7. Verfahren zur Magnetkopfreinigung eines Magnetbandschreib-/lesegerätes mit Hilfe eines Reinigungsbandes, gekennzeichnet durch folgende Verfahrensschritte:

a) Verwendung eines mit einem Reinigungsbandabschnitt (13) versehenen bandförmigen Datenträgers (10)

b) Auswertung der vom Datenträger (10) gelesenen Daten im Hinblick darauf, ob eine für eine Magnetkopfverschmutzung typische Fehlerart vorliegt

c) im Falle einer typischen Fehlerdetektion Ansteuern des Reinigungsbandabschnittes (13)

d) Durchführung eines Reinigungsvorgangs

e) Fortsetzung des Schreib-/Lesevorgangs

8. Verfahren nach Anspruch 7, dadurch gekennzeichnet, daß der Reinigungsvorgang dadurch durchgeführt wird, daß der Reinigungsbandabschnitt (13 ) um eine vorgegebene Bandlänge am Magnetkopf (24) vorbeibewegt wird oder daß beim Vorhandensein einer Magnetkopftrommel (23) diese um eine vorgegebene Anzahl von Umdrehungen in Bewegung gesetzt wird.

9. Verfahren nach Anspruch 7 oder 8, dadurch gekennzeichnet, daß nach dem Reinigungsvorgang zunächst eine erneute Fehlerüberprüfung durchgeführt wird.

10. Vorrichtung zur Durchführung des Verfahrens nach Anspruch 7, dadurch gekennzeichnet, daß eine elektronische Auswerteeinheit (26) zur Fehlerartbestimmung vorhanden ist, und daß die Auswerteeinheit (26) mit dem Bandantrieb (27) in Verbindung steht.

EP 0 315 624 A2

Fig.1

Fig.2

Fig.3